# EUROPÄISCHE PATENTSCHRIFT

(11) **EP 2 210 217 B1**
(45) Veröffentlichungstag und Bekanntmachung des Hinweises auf die Patenterteilung: **08.02.2012**
(21) Anmeldenummer: 08850062.4
(22) Anmeldetag: 16.10.2008
(51) Int. Cl.: G06K 13/07

(54) **VORRICHTUNG ZUR BEARBEITUNG VON CHIP-KARTEN**
INSTALLATION FOR TREATING CHIP CARDS
DISPOSITIF DE TRAITEMENT DE CARTES À PUCE

(30) Priorität: 13.11.2007 DE 102007054441
(43) Veröffentlichungstag der Anmeldung: 28.07.2010
(73) Patentinhaber: Atlantic Zeiser GmbH, 78576 Emmingen (DE)
(72) Erfinder: ANHOLD, Patrick, 78052 Tannheim (DE); GROMMINGER, Manuel, 78576 Liptingen (DE); WERNER, Uwe, CH-8142 Uitikon (CH); GUNTHART, Matthias, CH-5000 Aarau (CH)
(74) Vertreter: Naumann, Ulrich
(86) Internationale Anmeldenummer: PCT/DE2008/001676
(87) Internationale Veröffentlichungsnummer: WO 2009/062459

(56) Entgegenhaltungen:
- EP-A2- 0 863 482
- WO-A1-2007/125063
- DE-A1- 19 610 739
- DE-A1- 19 617 661

## Beschreibung

Die Erfindung betrifft ganz allgemein eine Vorrichtung zur Bearbeitung flächiger und/oder räumlicher Teile, insbesondere von Karten, vorzugsweise zum Programmieren von Chip-Karten, mit einer mehrere Bearbeitungsstationen (Zellen) umfassenden Bearbeitungseinrichtung, die vorzugsweise mit Programmierköpfen ausgestattet sind, wobei eine Zuführeinrichtung die zu bearbeitenden Teile zur Bearbeitungseinrichtung fördert, wobei die zu bearbeitenden Teile an die Bearbeitungsstationen übergeben, die bearbeiteten Teile aus den Bearbeitungsstationen entnommen und von einer Abführeinrichtung weiter gefördert werden, und wobei die Bearbeitungseinrichtung mit vorzugsweise in einer Ebene liegenden Bearbeitungsstationen bzw. Zellen ausgebildet ist.

Dabei sei darauf hingewiesen, dass es sich bei den zu bearbeitenden Teilen um Teile jedweder Art handeln kann, insbesondere um sog. Chip-Karten.

Im Lichte der voranstehenden Ausführungen geht es hier insbesondere um die Bearbeitung von Chip-Karten jedweder Art, wobei unter "Bearbeitung" jedwede Bearbeitung zu verstehen ist, beispielsweise das Programmieren solcher Chip-Karten oder das Beladen der Chip-Karten mit Daten. Folglich geht es hier auch um das Beladen von als Geldkarten und Kreditkarten genutzten Chip-Karten mit individuellen Daten unterschiedlicher Art, so auch von SIM-Karten, SIM-Plug-IN's, ID-Karten, etc., die allesamt unter den Begriff Chip-Karten zu subsumieren sind. Des Weiteren sei darauf hingewiesen, dass das zu programmierende Teil nicht zwingend in Kartenform vorliegen muss. Neben flächigen Gebilden kommen auch räumliche Gebilde jedweder Art in Frage, insbesondere im miniaturisierten Bereich.

Wenngleich es hier grundsätzlich um die Bearbeitung beliebiger flächiger und/oder räumlicher Teile geht, sei zur Vereinfachung der Beschreibung fortan von Chip-Karten die Rede, wobei dieser Begriff stellvertretend für beliebige Teile zu verstehen ist.

Üblicherweise werden Transporteinrichtungen zum schrittweisen Transportieren der zu bearbeitenden Chip-Karten genutzt, wobei die zu bearbeitenden Chip-Karten verschiedenen Bearbeitungsstationen zugeführt werden. Der Transport der zu bearbeitenden Chip-Karten erfolgt regelmäßig schrittweise, wobei die Verweildauer in den Bearbeitungsstationen der Dauer der Transportunterbrechung oder einem vielfachen davon entspricht. Entsprechend ist die Durchsatzgeschwindigkeit der Transporteinrichtung von der jeweils langsamsten bzw. am längsten arbeitenden Bearbeitungsstation einer Zeile bestimmt. Besonders zeitintensive Bearbeitungsstationen werden üblicherweise zu Arbeitseinheiten zusammengefasst, innerhalb derer eine gleichzeitige Bearbeitung mehrerer Chip-Karten möglich ist.

Zum relevanten Stand der Technik wird lediglich beispielhaft auf die DE 199 43 285 A1 verwiesen. Dort sind entsprechend den voranstehenden Ausführungen mehrere Bearbeitungsstationen zu einer oder mehreren Einheiten zusammengefasst, so dass die Durchsatzgeschwindigkeit der Transportvorrichtung aufgrund der parallelen Bearbeitung in den Bearbeitungsstationen erhöht ist. Auch lässt sich dadurch die Gesamtlänge der Fertigungskette reduzieren. Im Konkreten ist bei der gattungsbildenden Vorrichtung neben der Transporteinrichtung ein vertikal taktweise verschiebbarer Kontaktierturm vorgesehen, der mehrere übereinander liegende Ebenen von zu Arbeitseinheiten zusammengefassten Bearbeitungsstationen umfasst. Die Ebenen der Bearbeitungsstationen sind parallel zur Ebene der Transporteinrichtung angeordnet. Der Kontaktierturm ist zumindest auf einer Seite offen, so dass eine Beschickung mit Chip-Karten und eine Entnahme möglich ist.

Die gattungsbildende Vorrichtung zur Bearbeitung von Chip-Karten ist jedoch in der Praxis problematisch, da der Kontaktierturm aufgrund der mehreren übereinander liegenden Ebenen entsprechend der Anzahl der Ebenen äußerst hoch baut und somit einen ganz erheblichen Raum benötigt. Außerdem führt die lineare Anordnung der Ebenen über- bzw. untereinander zu einem ganz erheblichen Aufwand in der erforderlichen Bewegung des Kontaktierturms. Sind zahlreiche Ebenen vorgesehen, so ist nach Erreichen der letzten Ebene ein erheblicher Verfahrweg zu bewältigen, um wieder zu der ersten Ebene zu gelangen.

Aus der DE 199 43 285 A1 ist ein in Einzelschritten getakteter Transport von Chip-Karten bekannt, der selbst bei kurzen Programmierzeiten einen nur begrenzten Durchsatz ermöglicht. Bei langen Programmierzeiten führt die ungünstige Anordnung der Leseeinheiten zu einer schlechten Skalierbarkeit der Parallelverarbeitung, wodurch der Durchsatz begrenzt ist.

EP-A-863482 offenbart eine Vorrichtung gemäß den Merkmalen des Oberbegriffes von Anspruch 1.

Der vorliegenden Erfindung liegt nun die Aufgabe zugrunde, eine Vorrichtung zur Bearbeitung von flächigen und/oder räumlichen Teilen, insbesondere zum Programmieren von Chip-Karten derart auszugestalten und weiterzubilden, dass die voranstehend genannten Probleme zumindest reduziert sind. Außerdem soll der Verfahrweg der beweglichen Komponenten reduziert werden, um nämlich die Gesamtzeit für den Transport zu verringern.

Die voranstehende Aufgabe wird erfindungsgemäß durch eine Vorrichtung mit den Merkmalen des Patentanspruchs 1 gelöst. Danach ist die erfindungsgemäße Vorrichtung dadurch gekennzeichnet, dass eine Transfereinrichtung vorgesehen ist, die zur Übernahme der Teile aus der Zuführeinrichtung, zum Beladen der Bearbeitungsstationen mit den Teilen, zur Entnahme der bearbeiteten Teile aus den Bearbeitungsstationen und zur Übergabe der bearbeiteten Teile an die Abführeinrichtung dient.

Erfindungsgemäß ist erkannt worden, dass man bei der Ausgestaltung einer Bearbeitungseinrichtung auf eine voluminöse dreidimensionale Ausgestaltung verzichten kann, nämlich durch Realisierung einer äußerst flachen Bearbeitungseinrichtung, die insgesamt flächig ausgestaltet ist. Entsprechend liegen die Bearbeitungsstationen bzw. die zur Aufnahme der Programmierköpfe dienenden Zellen in einer Ebene, so dass die Bearbeitungseinrichtung und damit die gesamte Vorrichtung zur Bearbeitung von entsprechenden Teilen bzw. von Chip-Karten äußerst flach baut. Ein weiterer Vorteil ist darin zu sehen, dass die Transporteinrichtung in der gleichen Ebene oder in deren Nähe anzuordnen ist, so dass auch insoweit ein geringst mögliches Bauvolumen für die gesamte Vorrichtung erforderlich ist.

Des Weiteren ist erkannt worden, dass zur Realisierung eines schnellen Beladens und Entladens der Bearbeitungseinrichtung und somit der Bearbeitungsstationen eine besondere Transfereinrichtung geeignet ist, die zur Übernahme der Teile aus der Zuführeinrichtung, zum Beladen der Bearbeitungsstationen mit den Teilen, zur Entnahme der bearbeiteten Teile aus den Bearbeitungsstationen und zur Übergabe der bearbeiteten Teile an die Abführeinrichtung dient. Somit kommt der Transfereinrichtung eine ganz besondere - erfindungsgemäße - Bedeutung zu, da nämlich die Vorkehrung der Transfereinrichtung die Verfahrwege und somit die zum Beladen und Entladen der Bearbeitungsstationen erforderliche Zeit reduziert.

In vorteilhafter Weise sind die Bearbeitungsstationen gruppenweise in Zeilen angeordnet. Dabei ist es möglich, dass die Zeilen der Bearbeitungseinrichtung im Wesentlichen horizontal oder im Wesentlichen vertikal angeordnet sind. So lässt sich die Bearbeitungseinrichtung entweder als flache liegende Matrix oder als flacher matrixartig aufgebauter Turm realisieren, wobei je Zeile mehrere Bearbeitungsstationen im Sinne von Bearbeitungszellen angeordnet sind. Jeder der Zellen kann ein Schreib-/Lesegerät zum Bearbeiten der Chip-Karten zugeordnet sein.

In Bezug auf die Ausgestaltung der Transfereinrichtung ist es von Vorteil, wenn diese mindestens einen Transferschlitten zur Aufnahme der Teile aus der Zuführeinrichtung, zum Beladen der Bearbeitungsstationen mit den Teilen, zur Entnahme der bearbeiteten Teile aus den Bearbeitungsstationen und zur Übergabe der bearbeiteten Teile an die Abführeinrichtung umfasst. Der Transferschlitten kann parallel und orthogonal zu der Bearbeitungseinrichtung verfahrbar ausgeführt sein, so dass dieser entlang der unterschiedlichen Zeilen der Bearbeitungseinrichtung und zu den Bearbeitungsstationen hin verfahrbar ist.

In Bezug auf ein besonders schnelles und möglichst gleichzeitiges Be- und Entladen der Bearbeitungsstationen ist es von weiterem Vorteil, wenn die Transfereinrichtung einen Beladeschlitten zur Aufnahme der Teile von der Zuführeinrichtung und zum Beladen der Bearbeitungsstationen mit den Teilen und einen Entladeschlitten zur Entnahme der bearbeiteten Teile aus den Bearbeitungsstationen und zur Übergabe der bearbeiteten Teile an die Abführeinrichtung umfasst. Somit ist es möglich, die Bearbeitungseinrichtung gleichzeitig mit neuen Teilen zu beladen und bearbeitete Teile über den Entladeschlitten zu entnehmen und weiter zu reichen. Das Be- und Entladen erfolgt vorzugsweise zeilenweise.

Auch ist es denkbar, dass die Bearbeitungseinrichtung mit den Bearbeitungsstationen verfahrbar ist, nämlich quer zur Transporteinrichtung und zur Längsrichtung der Transfereinrichtung, wobei die Transfereinrichtung wiederum orthogonal zu der Bearbeitungseinrichtung bewegbar sein kann. Jedoch empfiehlt es sich, die Verfahrbarkeit der relativ schweren und insoweit trägen Bearbeitungseinrichtung komplett auf die Transfereinrichtung zu verlagern. So ist es von besonderem Vorteil, wenn der Beladeschlitten und der Entladeschlitten einerseits parallel und andererseits orthogonal zu der Bearbeitungseinrichtung verfahrbar sind.

In Bezug auf die Anordnung der funktionalen Einheiten der Transfereinrichtung ist es denkbar, dass der Beladeschlitten und der Entladeschlitten auf der gleichen Seite der Bearbeitungseinrichtung angeordnet sind. Ebenso ist es denkbar, dass der Beladeschlitten und der Entladeschlitten auf gegenüberliegenden Seiten der Bearbeitungseinrichtung, d.h. beidseitig der Bearbeitungseinrichtung, angeordnet sind.

Im Konkreten ist der Transferschlitten bzw. sind der Beladeschlitten und der Entladeschlitten mit einer Schiene, Stange oder dgl. parallel zu der Bearbeitungseinrichtung bewegbar und mit der Schiene, Stange oder dgl. oder von dieser weg orthogonal zu der Bearbeitungseinrichtung verlagerbar. Somit ist es möglich, die Schlitten parallel zur Oberfläche der Bearbeitungseinrichtung, über die jeweiligen Zeilen der Bearbeitungsstationen hinweg, zu bewegen. Zum Beladen und Entladen der Bearbeitungsstationen lassen sich der Beladeschlitten und der Entladeschlitten zu den Bearbeitungsstationen hin und von den Bearbeitungsstationen weg bewegen. Die Teile können über Manipulatoren, bspw. saugtechnisch, abgelegt und angehoben werden.

Die Zuführeinrichtung und die Abführeinrichtung können zumindest in etwa in der Ebene der Bearbeitungseinrichtung liegen. Des Weiteren ist es von Vorteil, wenn die Zuführeinrichtung eine Zuführstation und die Abführeinrichtung eine Abführstation zum vorzugsweise gleichzeitigen Zuführen und Abführen mehrerer Teile, möglichst zeilenweise, umfasst.

Des Weiteren ist es von Vorteil, wenn die Zuführstation und die Abführstation linear zu der Bearbeitungseinrichtung, vorzugsweise in deren Ebene, angeordnet sind. Ebenso ist es denkbar, dass die Zuführstation und die Abführstation versetzt zueinander, ebenfalls vorzugsweise in der Ebene der Bearbeitungseinrichtung, angeordnet sind.

Insbesondere im Hinblick auf einen kleinen Bauraum ist es von Vorteil, wenn die Zuführstation und die Abführstation zumindest im Wesentlichen innerhalb des Bereichs der Bearbeitungseinrichtung liegen. Auch ist es denkbar, dass die Zuführstation und die Abführstation in gegenüberliegenden Randbereichen der Bearbeitungseinrichtung liegen. Des Weiteren können die Zuführstation und die Abführstation innerhalb der Bearbeitungseinrichtung, vorzugsweise in einem in etwa mittigen Bereich, nebeneinander liegen. Im Rahmen einer weiteren Alternative ist es denkbar, dass die Zuführstation und die Abführstation in etwa außerhalb des Bereichs der Bearbeitungseinrichtung, vorzugsweise beidseitig der Bearbeitungseinrichtung, neben dieser liegen.

In weiter vorteilhafter Weise sind die Zuführeinrichtung und die Abführeinrichtung an gegenüberliegenden Endbereichen der Bearbeitungseinrichtung ausgebildet. Auch ist es denkbar, dass die Zuführeinrichtung und die Abführeinrichtung am gleichen Endbereich der Bearbeitungseinrichtung ausgebildet sind, je nach Bedarf.

Im Rahmen der voranstehend erörterten Möglichkeiten kann die Zuführeinrichtung auf einer Seite der Bearbeitungseinrichtung zuführen und die Abführeinrichtung auf der anderen Seite der Bearbeitungseinrichtung abführen. Dabei ist es denkbar, dass die Zuführeinrichtung und die Abführeinrichtung zumindest in etwa in der gleichen Ebene wie die Bearbeitungseinrichtung oder in einer gemeinsamen Ebene neben oder unter der Bearbeitungseinrichtung liegen, je nach dem, ob die Bearbeitungseinrichtung flach im Sinne einer liegenden Matrix oder turmartig im Sinne einer flachen stehenden Matrix ausgeführt ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein erstes Ausführungsbeispiel einer erfindungsgemäßen Vorrichtung, wobei die Bearbeitungseinrichtung im Sinne einer flachen Horizontal-Matrix mit einander gegenüberliegenden, versetzten Zuführ- und Abführeinrichtungen ausgeführt ist,
- Fig. 2: in einer schematischen Ansicht ein zweites Ausführungsbeispiel einer erfindungsgemäßen Vorrichtung, wobei die Bearbeitungseinrichtung im Sinne einer flachen Horizontal-Matrix mit einander gegenüberliegenden fluchtenden Zuführ- und Abführeinrichtungen ausgeführt ist,
- Fig. 3: in einer schematischen Ansicht ein drittes Ausführungsbeispiel einer erfindungsgemäßen Vorrichtung, wobei die Bearbeitungseinrichtung im Sinne einer flachen Horizontal-Matrix mit mittig versetzten Zuführ- und Abführeinrichtungen ausgeführt ist,
- Fig. 4: in einer schematischen Ansicht ein viertes Ausführungsbeispiel einer erfindungsgemäßen Vorrichtung, wobei die Bearbeitungseinrichtung im Sinne einer flachen Horizontal-Matrix gegenüber der Zuführeinrichtung, der Abführeinrichtung und der Transfereinrichtung in der Ebene der Bearbeitungseinrichtung verfahrbar ist,
- Fig. 5: in einer schematischen Ansicht die Ausführungsbeispiele aus den Fig. 1, 3 und 4 im Vergleich, insbesondere in Bezug auf die unterschiedlichen Verfahrwege,
- Fig. 6: in einer schematischen Ansicht ein fünftes Ausführungsbeispiel einer erfindungsgemäßen Vorrichtung, wobei die Bearbeitungseinrichtung im Sinne einer flachen Vertikal-Matrix ausgeführt ist und wobei die Zuführeinrichtung und Abführeinrichtung unter der Bearbeitungseinrichtung verläuft und der Beladeschlitten und der Entladeschlitten der Transfereinrichtung seitlich der Bearbeitungseinrichtung, auf gegenüberliegenden Seiten, vertikal verfahrbar sind,
- Fig. 7: in einer schematischen Ansicht ein sechstes Ausführungsbeispiel einer erfindungsgemäßen Vorrichtung, wobei die Bearbeitungseinrichtung im Sinne einer flachen Vertikal-Matrix ausgeführt ist und wobei die Zuführeinrichtung und Abführeinrichtung seitlich der Bearbeitungseinrichtung, in etwa mittig, angeordnet und der Beladeschlitten und der Enteladeschlitten seitlich der Bearbeitungseinrichtung vertikal verfahrbar sind,
- Fig. 8: in einer schematischen Ansicht ein siebtes Ausführungsbeispiel einer erfindungsgemäßen Vorrichtung, wobei die Bearbeitungseinrichtung im Sinne einer flachen Vertikal-Matrix ausgeführt ist und wobei die Bearbeitungseinrichtung relativ zu der seitlichen Zuführeinrichtung und Abführeinrichtung sowie zu den seitlichen Beladeschlitten und Entladeschlitten vertikal verfahrbar ist,
- Fig. 9: in einer schematischen Ansicht die Vorrichtungen aus den Fig. 6, 7 und 8 im Vergleich, insbesondere in Bezug auf den vertikalen Verfahrweg,
- Fig. 10: in einer schematischen Ansicht den Kartenwechsel im Vergleich zwischen Horizontal-Matrix und Vertikal-Matrix,
- Fig. 11: in einer schematischen Ansicht die Verfahrfreitheit im Vergleich zwischen Horizontal-Matrix und Vertikal-Matrix,
- Fig. 12: in einer schematischen Ansicht das Prinzip des Be- und Entladens bei einer Horizontal-Matrix,
- Fig. 13: in einer schematischen Ansicht das Prinzip des Be- und Entladens bei einer Vertikal-Matrix,
- Fig. 14: in einer schematischen Ansicht das Positionieren bei einer Vertikal-Matrix,
- Fig. 15: in einer schematischen Ansicht den Hub zum Be- und Entladen bei einer Vertik-Matrix,
- Fig. 16: in einer schematischen Ansicht das Umgehen der Bearbeitung bzw. Programmierung bei einer Vertik-Matrix,
- Fig. 17, 18: in schematischen Ansichten verschiedene Varianten des Antriebs bzw. der Führung des Beladeschlittens und des Entladeschlittens.

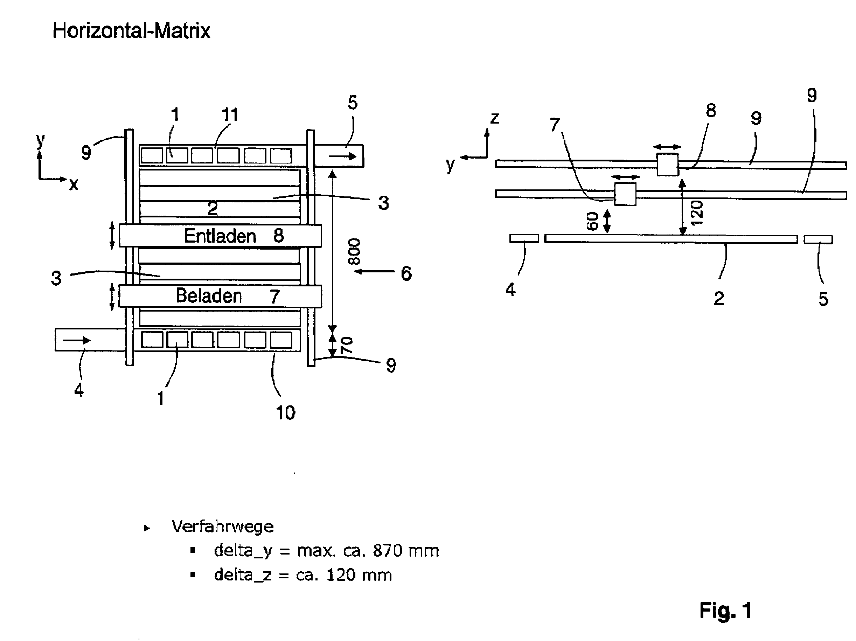

Fig. 1 zeigt ein erstes Ausführungsbeispiel einer erfindungsgemäßen Vorrichtung zum Programmieren von Karten, wobei es sich hier im Konkreten um Chip-Karten 1 handelt. Die Vorrichtung umfasst eine Bearbeitungseinrichtung 2 mit mehreren in der Figur nicht gezeigten Bearbeitungsstationen, die zeilenweise angeordnet sind. Die Zeilen 3 sind angedeutet.

Des Weiteren ist eine Zuführeinrichtung 4 vorgesehen, die die zu bearbeitenden Teile 1 zur Bearbeitungseinrichtung 2 fördert. Die zu bearbeitenden Teile 1 werden an die Bearbeitungsstationen übergeben. Die bearbeiteten Teile 1 werden aus den Bearbeitungsstationen entnommen und von einer Abführeinrichtung 5 weiter gefördert. Die Bearbeitungseinrichtung 2 ist mit in einer Ebene liegenden Bearbeitungsstationen bzw. Zellen ausgebildet, die entsprechend den voranstehenden Ausführungen wiederum zeilenartig angeordnet sind.

Erfindungsgemäß ist eine Transfereinrichtung 6 vorgesehen, die zur Übernahme der Teile aus der Zuführeinrichtung 4, zum Beladen der Bearbeitungsstationen mit den Teilen 1, zur Entnahme der bearbeiteten Teile 1 aus den Bearbeitungsstationen und zur Übergabe der bearbeiteten Teile 1 an die Abführeinrichtung 5 dient.

Bei dem in Fig. 1 gezeigten Ausführungsbeispiel ist die matrixartige Bearbeitungseinrichtung 2 horizontal ausgelegt.

Die Transfereinrichtung 6 umfasst einen Beladeschlitten 7 zur Aufnahme der Teile 1 von der Zuführeinrichtung 4 und zum Beladen der Bearbeitungsstationen mit den Teilen 1. Des Weiteren ist ein Entladeschlitten 8 zur Entnahme der bearbeiteten Teile 1 aus den Bearbeitungsstationen und zur Übergabe der bearbeiteten Teile 1 an die Abführeinrichtung 5 vorgesehen. Der Beladeschlitten 7 und der Entladeschlitten 8 sind parallel zu der Bearbeitungseinrichtung 2 angeordnet und jeweils auf einander gegenüberliegenden Seiten der Bearbeitungseinrichtung 2 über Stangen 9, die bspw. in Form einer Zahnstange oder Kugelumlaufspindel ausgeführt sind, geführt. Es ist denkbar, den Beladeschlitten 7 und den Entladeschlitten 8 über einen Zahnriemen zur Bewegung anzutreiben. Beliebige Linearführungen sind realisierbar.

Fig. 1 zeigt des Weiteren, dass die Zuführeinrichtung 4 eine Zuführstation 10 und die Abführeinrichtung 5 eine Abführstation 11 zum vorzugsweise gleichzeitigen Zuführen und Abführen mehrerer Teile 1 umfasst. Die Anordnung von Zuführstation 10 und Abführstation 11 seitlich der Bearbeitungseinrichtung 2 ist erkennbar.

Des Weiteren sei darauf hingewiesen, dass sich der Beladeschlitten 7 und der Entladeschlitten 8 über die Stangen 9 bzw. einen geeigneten Antrieb parallel zu der Bearbeitungseinrichtung 2 verfahren lässt. Des Weiteren sind der Beladeschlitten 7 und der Entladeschlitten 8 orthogonal zu der Bearbeitungseinrichtung 2 verlagerbar bzw. bewegbar, nämlich um die Teile 1 in die Bearbeitungsstationen einzubringen bzw. aus den Bearbeitungsstationen zu entnehmen. Durch Verfahren von Beladeschlitten 7 und Entladeschlitten 8 lassen sich die jeweiligen Zeilen 3 der Bearbeitungseinrichtung 2 ansteuern und lassen sich die Teile 1 aus der Zuführstation 10 entnehmen und in die Abführstation 11 ablegen.

Fig. 1 zeigt des Weiteren eine beispielhafte Vermaßung, auf deren Grundlage die Verfahrwege, nicht zuletzt zum Zwecke einer vergleichenden Betrachtung, berechnet sind.

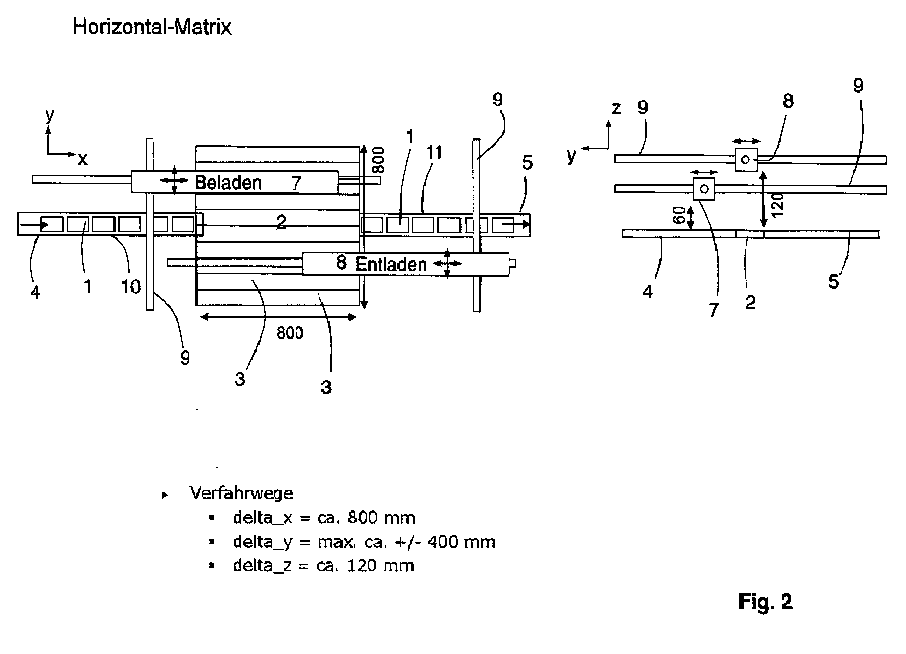

Fig. 2 zeigt ein zweites Ausführungsbeispiel einer erfindungsgemäßen Vorrichtung, wobei dort die Zuführeinrichtung 4 und Abführeinrichtung 5 linear zur Bearbeitungseinrichtung 2 angeordnet sind. Entsprechend sind der Beladeschlitten 7 und Entladeschlitten 8 sowohl quer zur Fördereinrichtung der Zuführeinrichtung 4 und Abführeinrichtung 5 als auch zu deren Längsrichtung verfahrbar, da nämlich die Zuführstation 10 und Abführstation 11 außerhalb des Bereichs der matrixartigen Bearbeitungseinrichtung 2 liegen. Alles Weitere ergibt sich aus Fig. 2. Die Verfahrwege sind entsprechend berechnet und aufgeführt.

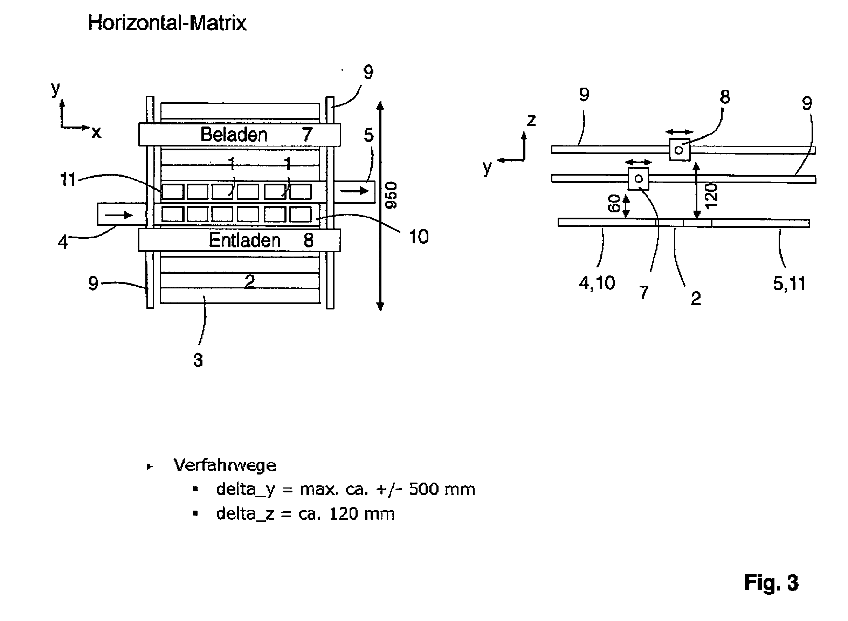

Fig. 3 zeigt ein drittes Ausführungsbeispiel einer erfindungsgemäßen Vorrichtung, wobei auch dort die matrixartige Bearbeitungseinrichtung 2 horizontal ausgelegt ist. Jedoch sind bei dem in Fig. 3 gezeigten Ausführungsbeispiel die Zuführstation 10 und die Abführstation 11 mittig in der Ebene der matrixartigen Bearbeitungseinrichtung 2 angeordnet. Der Beladeschlitten 7 und der Entladeschlitten 8 sind über die Bearbeitungseinrichtung 2 hinweg, parallel zu dieser, bewegbar, wobei aufgrund der Positionierung von Zuführstation 10 und Abführstation 11 eine seitliche Verlagerung von Beladeschlitten 7 und Entladeschlitten 8 nicht erforderlich sind. Auch hier sind die Verfahrwege unter Zugrundelegung der beispielhaften Vermaßung dargestellt.

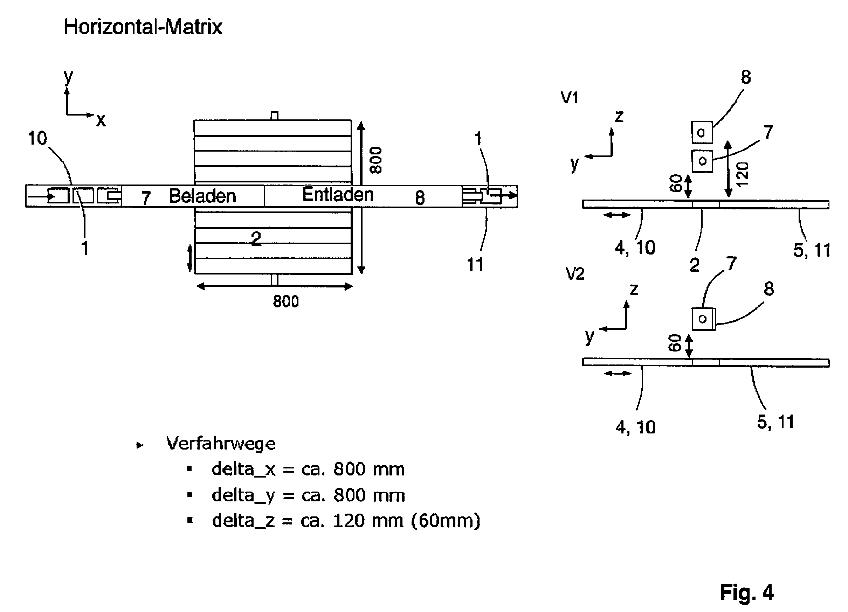

Bei dem in Fig. 4 gezeigten Ausführungsbeispiel ist die matrixartige Bearbeitungseinrichtung ebenfalls horizontal angeordnet, jedoch gegenüber der abseits liegenden Zuführstation 10 und der ebenfalls abseits liegenden Abführstation 11 verfahrbar, nämlich orthogonal dazu. Gleiches gilt in Bezug auf den Beladeschlitten 7 und den Entladeschlitten 8, der sich parallel und orthogonal zu der Bearbeitungseinrichtung 2 verlagern lässt, nämlich zum Zwecke des Einlegens der Teile 1 und der Entnahme der Teile 1 aus den zeilenweise angeordneten Bearbeitungsstationen. Auch hier sind die Verfahrwege definiert.

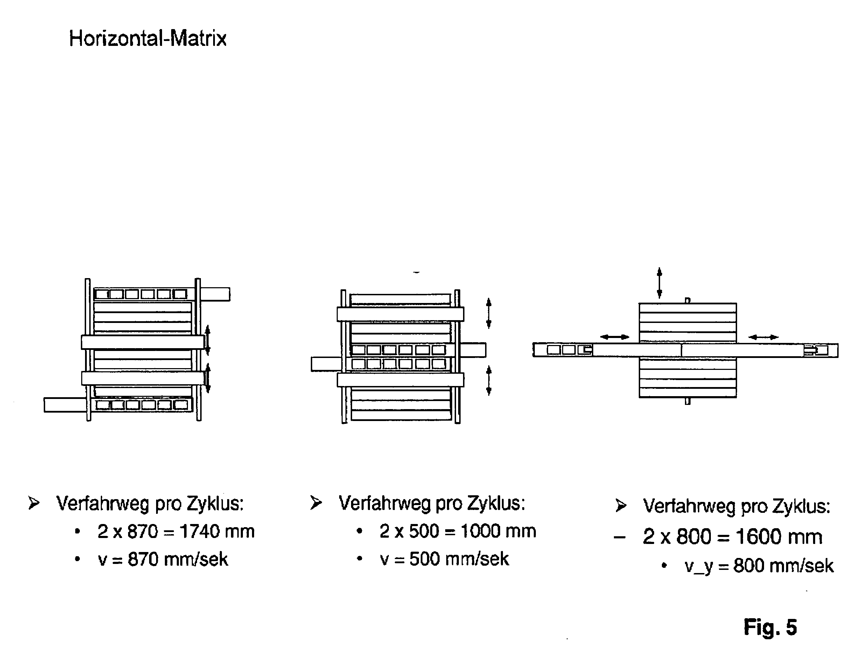

Fig. 5 zeigt im Vergleich die Varianten aus den Fig. 1, 3 und 4, wobei die Verfahrwege pro Zyklus nebeneinander dargestellt sind. Eine beispielhafte Betrachtung zeigt Vor- und Nachteile der drei Varianten.

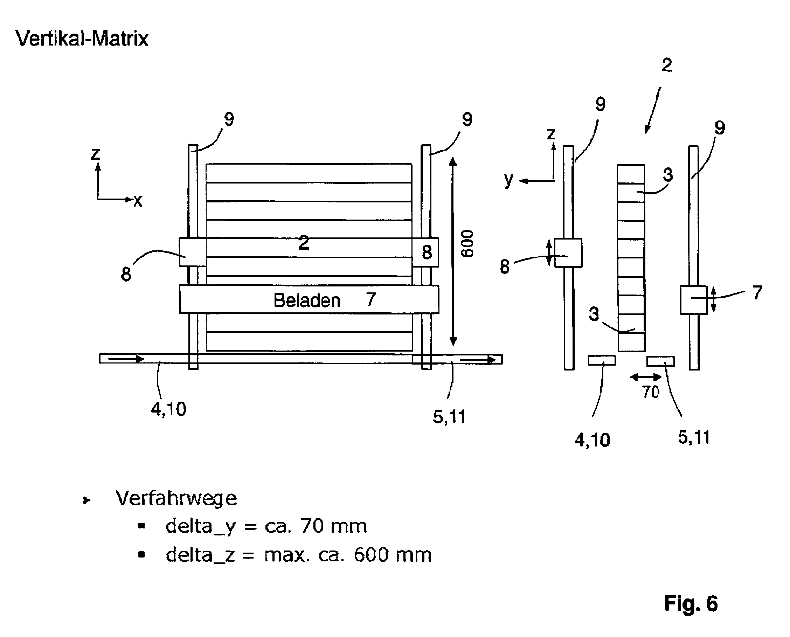

Fig. 6 zeigt ein weiteres Ausführungsbeispiel einer erfindungsgemäßen Vorrichtung, wobei dort die matrixartige Bearbeitungseinrichtung 2, im Gegensatz zu den Ausführungsbeispielen aus den Fig. 1 bis 5, vertikal angeordnet ist. Entsprechend sind die Zuführeinrichtung 4 und die Abführeinrichtung 5 unter der eigentlichen Bearbeitungseinrichtung 2, seitlich davon, ausgebildet. Der Beladeschlitten 7 und der Entladeschlitten 8 sind auf gegenüberliegenden Seiten der Bearbeitungseinrichtung 2 entlang den Stangen 9 verschiebbar. Die Verfahrwege sind auch hier angegeben.

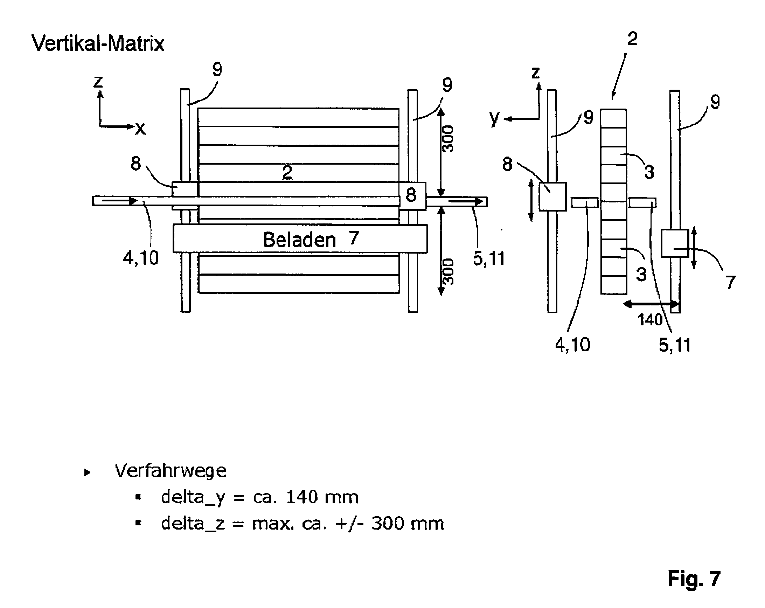

Fig. 7 zeigt ein weiteres Ausführungsbeispiel einer vertikal angeordneten Bearbeitungseinrichtung 2, wobei dort die Zuführeinrichtung 4 und die Abführeinrichtung 5 mittig und dabei seitlich der Bearbeitungseinrichtung 2 angeordnet sind. Seitlich davon befinden sich der Beladeschlitten 7 und der Entladeschlitten 8. Auch hier sind die Verfahrwege unter Zugrundelegung einer Vermaßung angegeben.

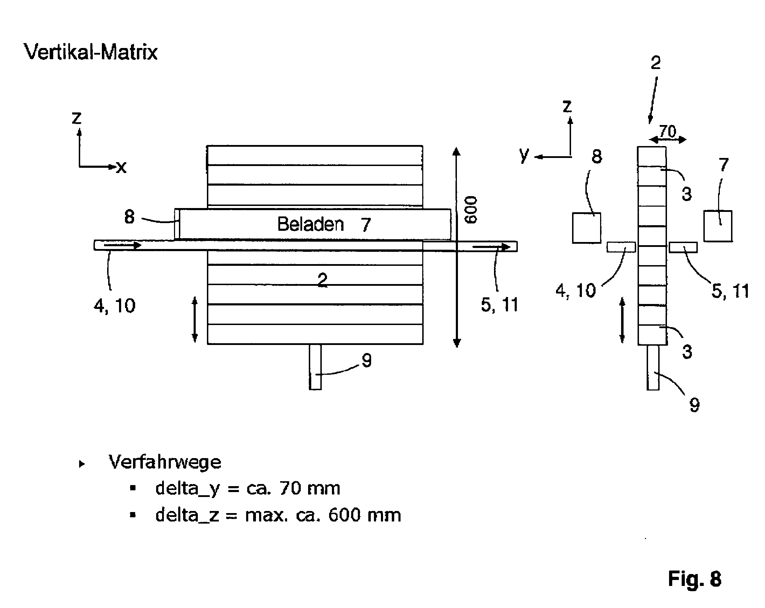

Fig. 8 zeigt ein weiteres Ausführungsbeispiel einer erfindungsgemäßen Vorrichtung mit vertikal angeordneter Bearbeitungseinrichtung 2, wobei dort die seitlich angeordnete Zuführeinrichtung 4, die Abführeinrichtung 5, der Beladeschlitten 7 und der Entladeschlitten 8 ortsfest sind. Die Bearbeitungseinrichtung 2 ist vertikal verschiebbar, um eine exakte Positionierung gegenüber dem Beladeschlitten 7, dem Entladeschlitten 8, der Zuführeinrichtung 4 und der Abführeinrichtung 5 vornehmen zu können.

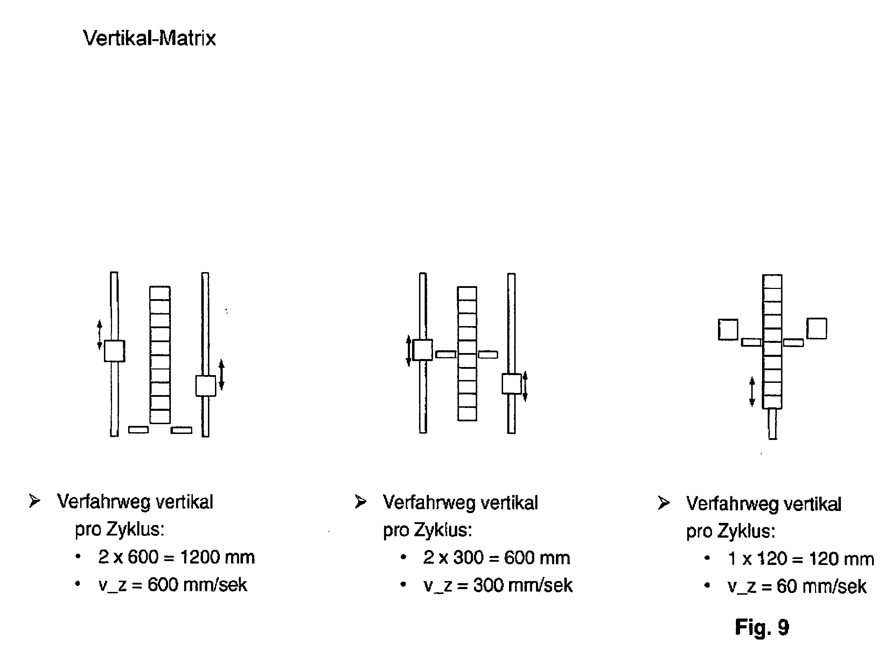

Fig. 9 zeigt eine vergleichende Betrachtung der Vorrichtungen entsprechend den Fig. 6, 7 und 8, insbesondere mit einem Vergleich der Verfahrwege.

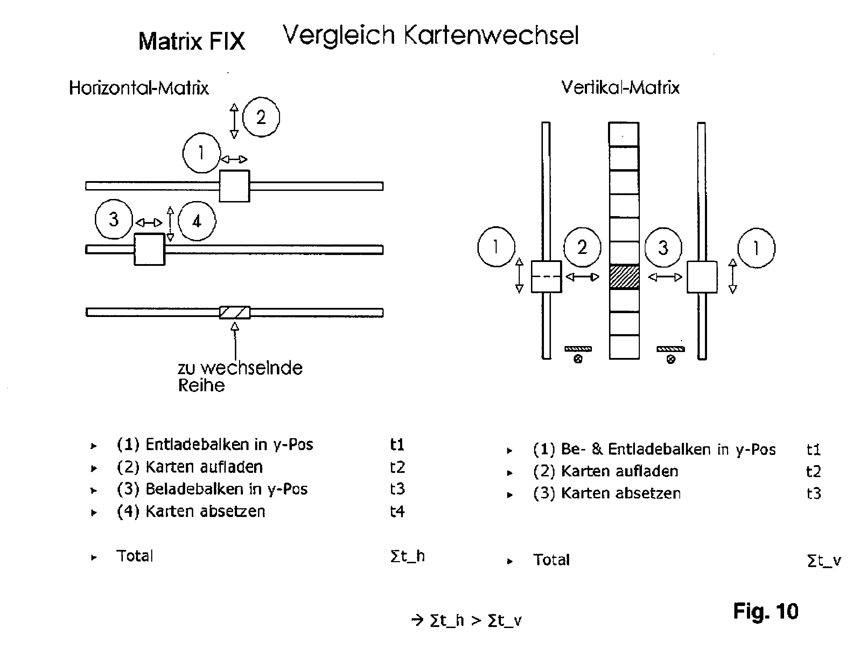

Fig. 10 zeigt einen Vergleich des Kartenwechsels bei Realisierung einer im Sinne einer Horizontal-Matrix ausgelegten Bearbeitungseinrichtung und einer im Sinne einer Vertikal-Matrix ausgelegten Bearbeitungseinrichtung. Fig. 10 ist nebst dortiger Beschreibung selbstredend, so dass sich Ausführungen dazu erübrigen.

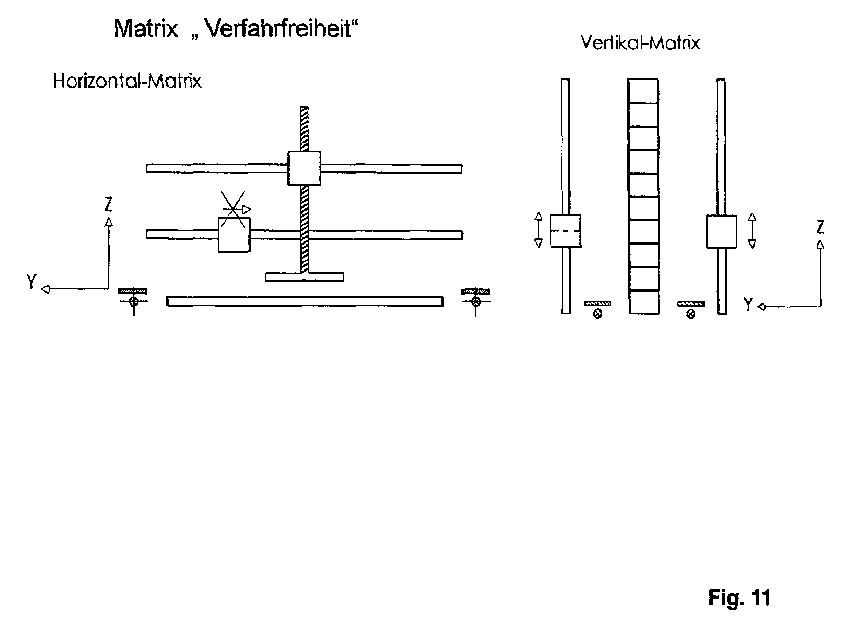

Fig. 11 zeigt abermals einen Vergleich der beiden Varianten - Bearbeitungseinrichtung mit Horizontal-Matrix und Bearbeitungseinrichtung mit Vertikal-Matrix - in Bezug auf die "Verfahrfreiheit". Auch Fig. 11 ist mit der dortigen Beschreibung selbstredend.

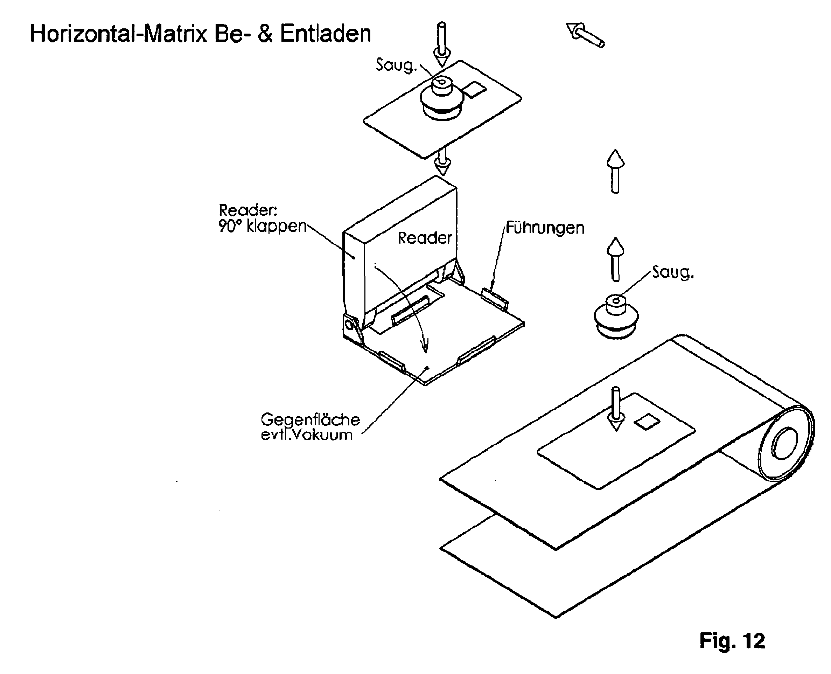

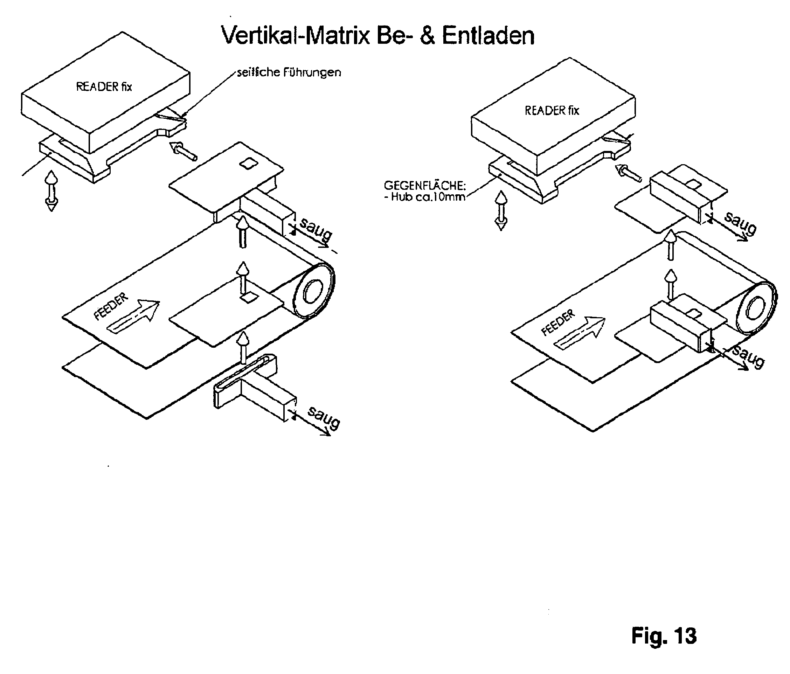

Fig. 12 zeigt eine Möglichkeit des Be- und Entladens bei einer als Horizontal-Matrix ausgeführten Bearbeitungseinrichtung, während Fig. 13 das Be- und Entladen bei einer als Vertikal-Matrix ausgeführten Bearbeitungseinrichtung zeigt.

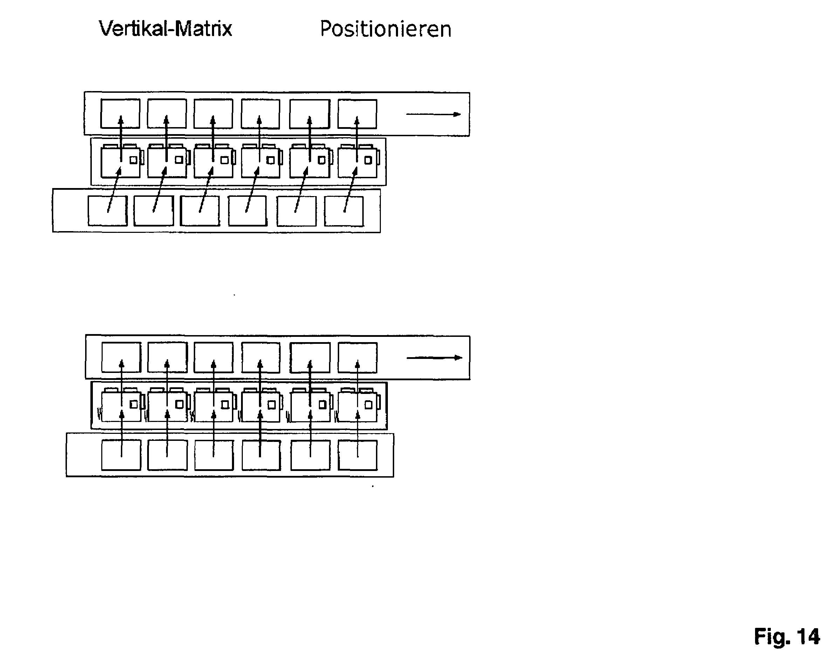

Fig. 14 zeigt das Positionieren bei einer als Vertikal-Matrix ausgebildeten Bearbeitungseinrichtung.

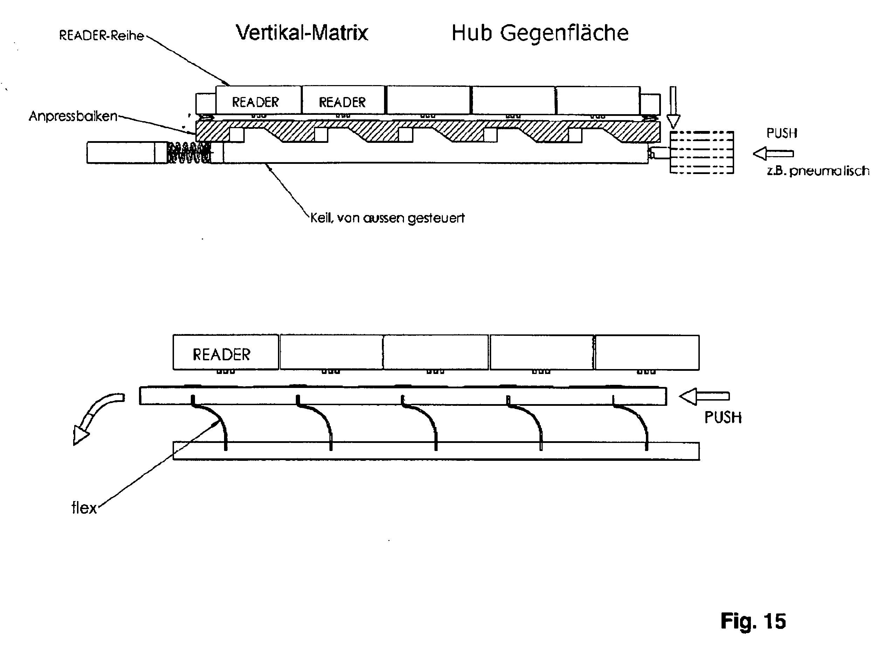

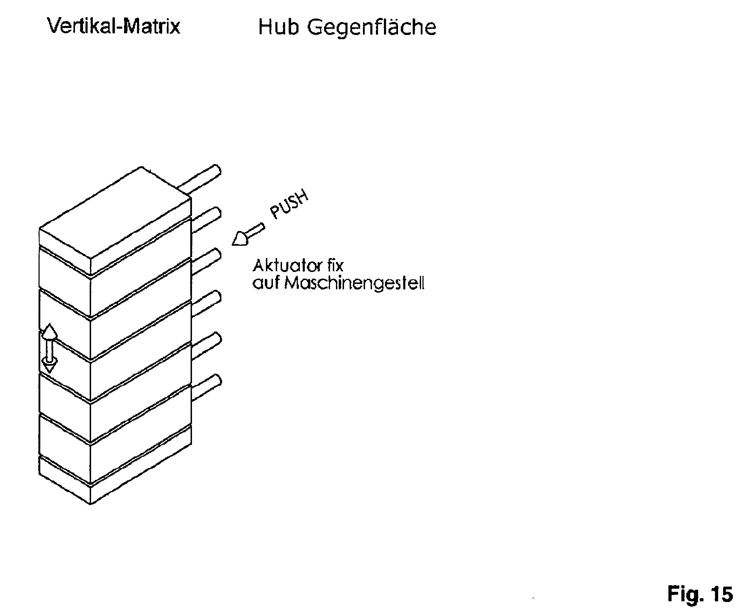

Fig. 15 zeigt bei einer als Vertikal-Matrix ausgeführten Bearbeitungseinrichtung den Hub durch Verschieben eines Keils unter einer Gegenfläche.

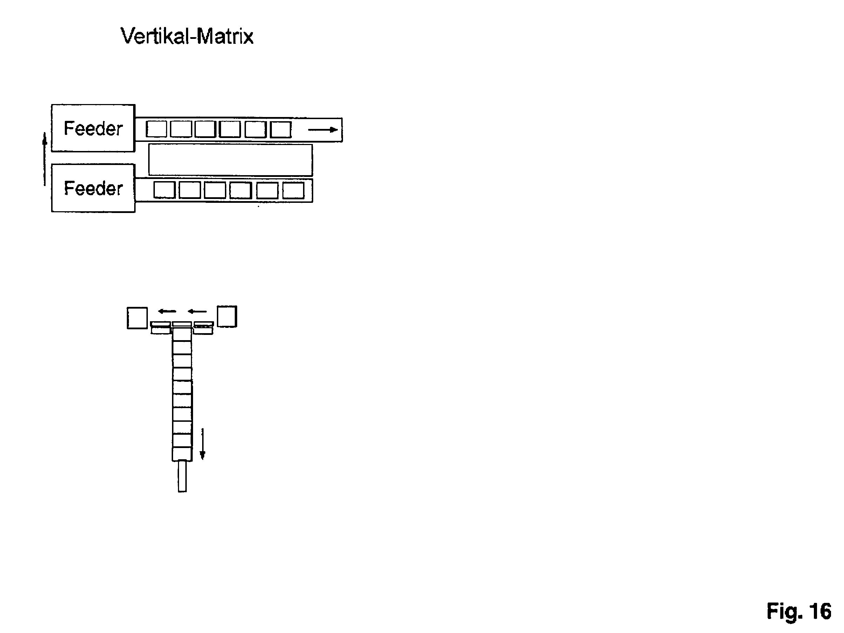

Fig. 16 zeigt bei einer als Vertikal-Matrix ausgeführten Bearbeitungseinrichtung das Umgehen der Programmierung, wie man nämlich Karten bspw. ohne Chip durch die eigentliche Programmierstation schleusen kann.

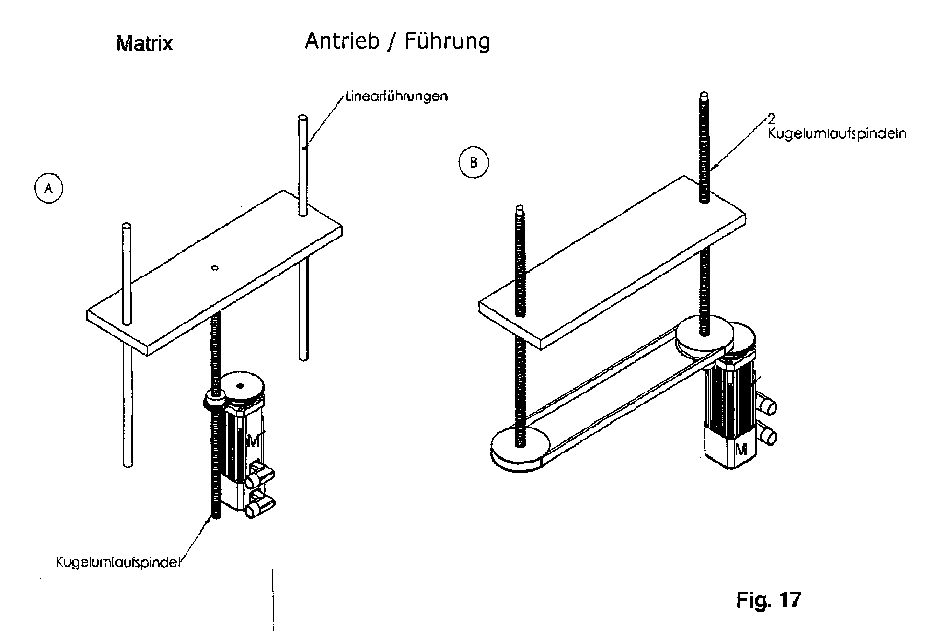

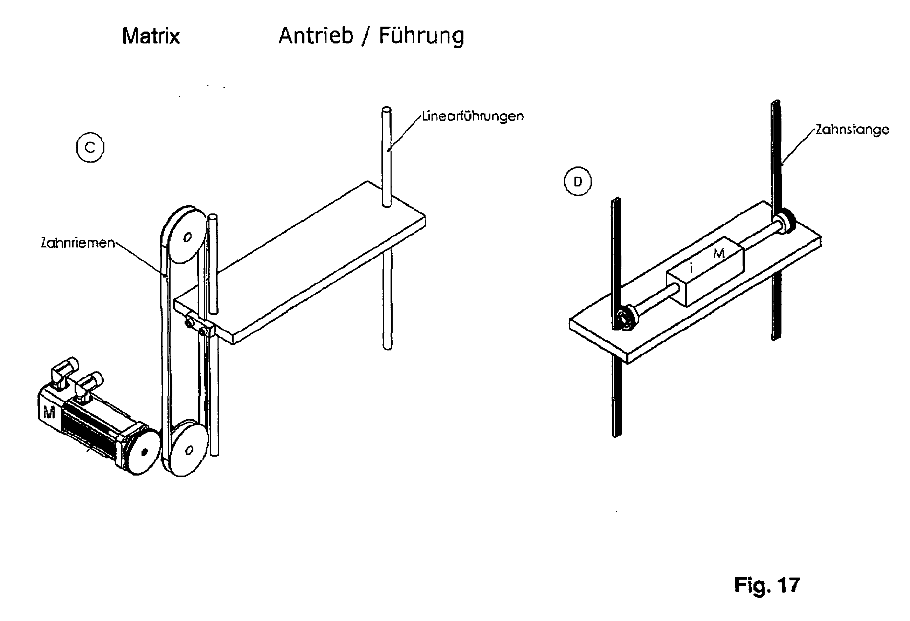

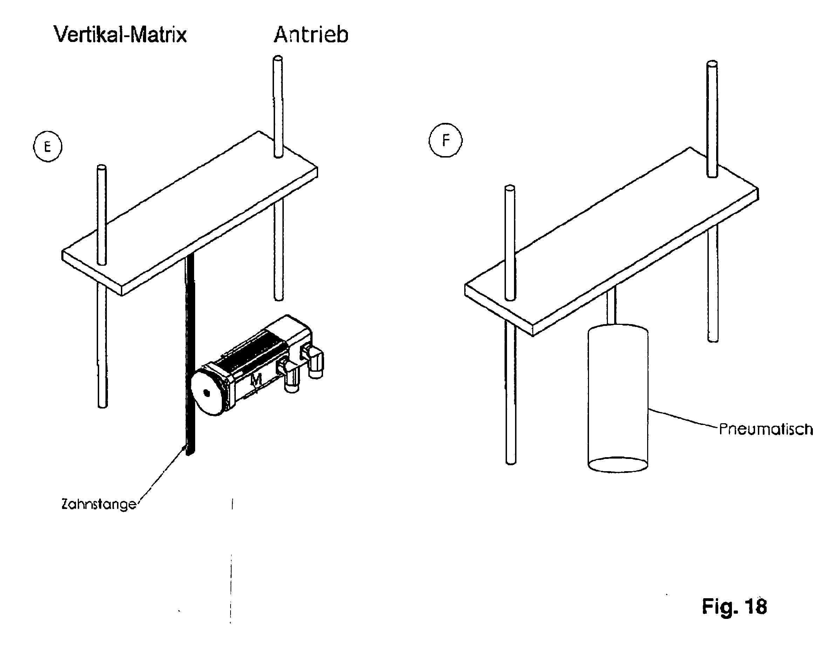

Die Fig. 17 und 18 zeigen Möglichkeiten zum Antrieb einerseits des Beladeschlittens und andererseits des Entladeschlittens, wobei die Schlitten unterschiedlich geführt sein können.

Schließlich sei angemerkt, dass die voranstehend erörterten Ausführungsbeispiele lediglich zur beispielhaften Erörterung der erfindungsgemäßen Lehre dienen, diese jedoch nicht auf die Ausführungsbeispiele einschränken.

### Bezugszeichenliste

- 1: Chip-Karte, Teil
- 2: Bearbeitungseinrichtung
- 3: Zelle mit Bearbeitungsstationen, Bearbeitungsstation
- 4: Zuführeinrichtung
- 5: Abführeinrichtung
- 6: Transfereinrichtung
- 7: Beladeschlitten
- 8: Entladeschlitten
- 9: Stange
- 10: Zuführstation
- 11: Abführstation

## Patentansprüche

1. Vorrichtung zur Bearbeitung von Chip-Karten, insbesondere zum Programmieren von Chip-Karten, mit einer mehrere Bearbeitungsstationen (3) umfassenden Bearbeitungseinrichtung (2), wobei eine Zuführeinrichtung (4) die Chip-Karten (1) zur Bearbeitungseinrichtung (2) fördert, wobei die Chip-Karten (1) an die Bearbeitungsstationen (3) übergeben, aus den Bearbeitungsstationen (3) entnommen und von einer Abführeinrichtung (5) weiter gefördert werden, und wobei die Bearbeitungseinrichtung (2) mit in einer Ebene liegenden Bearbeitungsstationen (3) ausgebildet ist, wobei die Bearbeitungsstationen (3) gruppenweise in Zeilen angeordnet sind und eine Transfereinrichtung (6) vorgesehen ist, die zur Übernahme der Chip-Karten (1) aus der Zuführeinrichtung (4), zum zeilenweisen Beladen der Bearbeitungsstationen (3) mit den Chip-Karten (1), zur zeilenweisen Entnahme der bearbeiteten Chip-Karten (1) aus den Bearbeitungsstationen (3) und zur Übergabe der Chip-Karten (1) an die Abführeinrichtung (5) dient, **dadurch gekennzeichnet, dass** die Zuführeinrichtung (4) eine Zuführstation (10) und die Abführeinrichtung (5) eine Abführstation (11) zum zeilenweise gleichzeitigen Zuführen und Abführen mehrerer Chip-Karten (1) umfasst.

2. Vorrichtung nach Anspruch 1, **dadurch gekennzeichnet, dass** die Zeilen der Bearbeitungseinrichtung (2) im Wesentlichen horizontal oder vertikal angeordnet sein können.

3. Vorrichtung nach Anspruch 1 oder 2, **dadurch gekennzeichnet, dass** die Transfereinrichtung (6) mindestens einen Transferschlitten zur Aufnahme der Chip-Karten (1) aus der Zuführeinrichtung (4), zum Beladen der Bearbeitungsstationen (3) mit den Chip-Karten (1), zur Entnahme der bearbeiteten Chip-Karten (1) aus den Bearbeitungsstationen (3) und zur Übergabe der bearbeiteten Chip-Karten (1) an die Abführeinrichtung (5) umfasst, wobei
der Transferschlitten parallel und orthogonal zu der Bearbeitungseinrichtung (2) verfahrbar sein kann.

4. Vorrichtung nach Anspruch 3, **dadurch gekennzeichnet, dass** die Transfereinrichtung (6) einen Beladeschlitten (7) zur Aufnahme der Chip-Karten (1) von der Zuführeinrichtung (4) und zum Beladen der Bearbeitungsstationen (2) mit den Chip-Karten (1) und einen Entladeschlitten (8) zur Entnahme der bearbeiteten Chip-Karten (1) aus den Bearbeitungsstationen (3) und zur Übergabe der bearbeiteten Chip-Karten (1) an die Abführeinrichtung (5) umfasst.

5. Vorrichtung nach einem der Ansprüche 1 bis 4, **dadurch gekennzeichnet, dass** die Bearbeitungseinrichtung (2) mit den Bearbeitungsstationen (3) vorzugsweise quer zur Transportrichtung und zur Längsrichtung der Transfereinrichtung (6) verfahrbar ist, wobei die Transfereinrichtung (6) orthogonal zu der Bearbeitungseinrichtung (2) bewegbar ist.

6. Vorrichtung nach Anspruch 4, **dadurch gekennzeichnet, dass** der Beladeschlitten (7) und der Entladeschlitten (8) einerseits parallel und andererseits orthogonal zu der Bearbeitungseinrichtung (2) verfahrbar sind und/oder
auf der gleichen Seite der Bearbeitungseinrichtung (2) oder
auf gegenüberliegenden Seiten der Bearbeitungseinrichtung (2), d.h. beidseitig, angeordnet sind.

7. Vorrichtung nach Anspruch 4 oder 6, **dadurch gekennzeichnet, dass** der Transferschlitten bzw. der Beladeschlitten (7) und der Entladeschlitten (8) entlang oder mit einer Schiene oder Stange (9) parallel zu der Bearbeitungseinrichtung (2) bewegbar und mit der Schiene, Stange (9) oder von dieser orthogonal zu der Bearbeitungseinrichtung (2) bewegbar ist.

8. Vorrichtung nach einem der Ansprüche 1 bis 7, **dadurch gekennzeichnet, dass** die Zuführeinrichtung (4) und die Abführeinrichtung (5) zumindest in etwa in der Ebene der Bearbeitungseinrichtung (2) liegen.

9. Vorrichtung nach einem der Ansprüche 1 bis 8, **dadurch gekennzeichnet, dass** die Zuführstation (10) und die Abführstation (11) linearer zu der Bearbeitungseinrichtung (2), vorzugsweise in deren Ebene, oder
versetzt zueinander, vorzugsweise in der Ebene der Bearbeitungseinrichtung (2), angeordnet sind.

10. Vorrichtung nach einem der Ansprüche 1 bis 9, **dadurch gekennzeichnet, dass** die Zuführstation (10) und die Abführstation (11) zumindest im Wesentlichen innerhalb des Bereichs der Bearbeitungseinrichtung (2) oder
in gegenüberliegenden Randbereichen der Bearbeitungseinrichtung (2) oder innerhalb der Bearbeitungseinrichtung (2), vorzugsweise in einem in etwa mittigen Bereich, nebeneinander oder
zumindest im Wesentlichen außerhalb des Bereichs der Bearbeitungseinrichtung (2), vorzugsweise beidseitig neben der Bearbeitungseinrichtung (2), liegen.

11. Vorrichtung nach einem der Ansprüche 1 bis 10, **dadurch gekennzeichnet, dass** die Zuführeinrichtung (4) und die Abführeinrichtung (5) an gegenüberliegenden Endbereichen der Bearbeitungseinrichtung (2) ausgebildet sind.

12. Vorrichtung nach einem der Ansprüche 1 bis 10. **dadurch gekennzeichnet, dass** die Zuführeinrichtung (4) und die Abführeinrichtung (5) am gleichen Endbereich der Bearbeitungseinrichtung (2) ausgebildet sind.

13. Vorrichtung nach einem der Ansprüche 1 bis 11, **dadurch gekennzeichnet, dass** die Zuführeinrichtung (4) auf einer Seite der Bearbeitungseinrichtung (2) zuführt und die Abführeinrichtung (5) auf der anderen Seite der Bearbeitungseinrichtung (2) abführt.

14. Vorrichtung nach einem der Ansprüche 1 bis 13, **dadurch gekennzeichnet, dass** die Zuführeinrichtung (4) und die Abführeinrichtung (5) zumindest in etwa in der gleichen Ebene wie die Bearbeitungseinrichtung (2) oder in einer gemeinsamen Ebene neben oder unter der Bearbeitungseinrichtung (2) liegen.

## Claims

1. Device for processing chip cards, in particular for programming chip cards, having a processing device (2) which comprises a plurality of processing stations (3), a conveying device (4) conveying the chip cards (1) to the processing device (2), the chip cards (1) being transferred to the processing stations (3), being removed from the processing stations (3) and being further conveyed by a discharge device (5), and the processing device (2) being constructed with processing stations (3) which are located in a plane, the processing stations (3) being arranged in groups in lines and there being provided a transfer device (6) which serves to transfer the chip cards (1) from the conveying device (4), to load the processing stations (3) with the chip cards (1) in lines, to remove the processed chip cards (1) from the processing stations (3) in lines, and to transfer the chip cards (1) to the discharge device (5), **characterised in that** the conveying device (4) comprises a conveying station (10) and the discharge device (5) comprises a discharge station (11) for conveying and discharging a plurality of chip cards (1) in lines at the same time.

2. Device according to claim 1, **characterised in that** the lines of the processing device (2) may be arranged substantially horizontally or vertically.

3. Device according to claim 1 or claim 2, **characterised in that** the transfer device (6) comprises at least one transfer carriage for receiving the chip cards (1) from the conveying device (4), for loading the processing stations (3) with the chip cards (1), for removing the processed chip cards (1) from the processing stations (3) and for transferring the processed chip cards (1) to the discharge device (5), the transfer carriage being able to be movable parallel and orthogonally relative to the processing device (2).

4. Device according to claim 3, **characterised in that** the transfer device (6) comprises a loading carriage (7) for receiving the chip cards (1) from the conveying device (4) and for loading the processing stations (2) with the chip cards (1) and an unloading carriage (8) for removing the processed chip cards (1) from the processing stations (3) and for transferring the processed chip cards (1) to the conveying device (5).

5. Device according to any one of claims 1 to 4, **characterised in that** the processing device (2) can be moved with the processing stations (3) preferably transversely relative to the transport direction and the longitudinal direction of the transfer device (6), the transfer device (6) being able to be moved orthogonally relative to the processing device (2).

6. Device according to claim 4, **characterised in that** the loading carriage (7) and the unloading carriage (8) can be moved on the one hand parallel with and on the other hand orthogonally relative to the processing device (2) and/or are arranged on the same side of the processing device (2) or at opposing sides of the processing device (2), that is to say, at both sides.

7. Device according to claim 4 or claim 6, **characterised in that** the transfer carriage or the loading carriage (7) and the unloading carriage (8) can be moved parallel with the processing device (2) along or with a rail or rod (9), and can be moved orthogonally relative to the processing device (2), or away from it, with the rail, rod (9).

8. Device according to any one of claims 1 to 7, **characterised in that** the conveying device (4) and the discharge device (5) are located at least substantially in the plane of the processing device (2).

9. Device according to any one of claims 1 to 8, **characterised in that** the conveying station (10) and the discharge station (11) are arranged in a linear manner relative to the processing device (2), preferably in the plane thereof, or
offset relative to each other, preferably in the plane of the processing device (2).

10. Device according to any one of claims 1 to 9, **characterised in that** the conveying station (10) and the discharge station (11) are located at least substantially in the region of the processing device (2) or
in opposing edge regions of the processing device (2) or in the processing device (2), preferably in a substantially central region, beside each other, or
at least substantially outside the region of the processing device (2), preferably at both sides beside the processing device (2).

11. Device according to any one of claims 1 to 10, **characterised in that** the conveying device (4) and the discharge device (5) are formed at opposing end regions of the processing device (2).

12. Device according to any one of claims 1 to 10, **characterised in that** the conveying device (4) and the discharge device (5) are formed at the same end region of the processing device (2).

13. Device according to any one of claims 1 to 11, **characterised in that** the conveying device (4) conveys at one side of the processing device (2) and the discharge device (5) discharges at the other side of the processing device (2).

14. Device according to any one of claims 1 to 13, **characterised in that** the conveying device (4) and the discharge device (5) are located at least substantially in the same plane as the processing device (2) or in a common plane beside or below the processing device (2).

## Revendications

1. Dispositif de traitement de cartes à puce, en particulier pour la programmation de cartes à puce, comportant un dispositif de traitement (2) comprenant plusieurs postes de traitement (3), un dispositif d'acheminement (4) transportant les cartes à puce (1) vers le dispositif de traitement (2), les cartes à puce (1) étant transmises aux postes de traitement (3), étant prélevées hors des postes de traitement (3) et étant transportées plus loin par un dispositif d'évacuation (5), le dispositif de traitement (2) étant réalisé avec des postes de traitement (3) situés dans un plan, lesdits postes de traitement (3) étant disposés en lignes par groupes, et un dispositif de transfert (6) étant prévu, lequel est destiné à réceptionner les cartes à puce (1) sortant du dispositif d'acheminement (4), à charger par lignes les cartes à puce (1) dans les postes de traitement (3), à prélever par lignes les cartes à puce (1) traitées hors des postes de traitement (3) et à transférer les cartes à puce (1) vers le dispositif d'évacuation (5), **caractérisé en ce que** le dispositif d'acheminement (4) comprend un poste d'acheminement (10) et le dispositif d'évacuation (5) comprend un poste d'évacuation (11) pour acheminer et évacuer simultanément par lignes plusieurs cartes à puce (1).

2. Dispositif selon la revendication 1, **caractérisé en ce que** les lignes du dispositif de traitement (2) peuvent être disposées sensiblement horizontalement ou verticalement.

3. Dispositif selon la revendication 1 ou 2, **caractérisé en ce que** le dispositif de transfert (6) comprend au moins un chariot de transfert pour réceptionner les cartes à puce (1) sortant du dispositif d'acheminement (4), pour charger les cartes à puce (1) dans les postes de traitement (3), pour prélever les cartes à puce (1) traitées hors des postes de traitement (3) et pour transférer les cartes à puce (1) traitées vers le dispositif d'évacuation (5), ledit chariot de transfert pouvant être déplacé parallèlement et orthogonalement au dispositif de traitement (2).

4. Dispositif selon la revendication 3, **caractérisé en ce que** le dispositif de transfert (6) comprend un chariot de chargement (7) pour réceptionner les cartes à puce (1) sortant du dispositif d'acheminement (4) et pour charger les cartes à puce (1) dans les postes de traitement (3), et un chariot de déchargement (8) pour prélever les cartes à puce (1) traitées hors des postes de traitement (3) et pour transférer les cartes à puce (1) traitées vers le dispositif d'évacuation (5).

5. Dispositif selon l'une quelconque des revendications 1 à 4, **caractérisé en ce que** le dispositif de traitement (2) peut être déplacé avec les postes de traitement (3) de préférence transversalement à la direction de transport et au sens longitudinal du dispositif de transfert (6), ledit dispositif de transfert (6) pouvant être déplacé orthogonalement au dispositif de traitement (2).

6. Dispositif selon la revendication 4, **caractérisé en ce que** le chariot de chargement (7) et le chariot de déchargement (8) peuvent être déplacés, d'une part, parallèlement et, d'autre part, orthogonalement au dispositif de traitement (2) et/ou sont disposés sur le même côté du dispositif de traitement (2) ou sur des côtés opposés du dispositif de traitement (2), c'est-à-dire de part et d'autre de celui-ci.

7. Dispositif selon la revendication 4 ou 6, **caractérisé en ce que** le chariot de transfert ou le chariot de chargement (7) et le chariot de déchargement (8) peuvent être déplacés le long ou avec un rail ou une barre (9) parallèlement au dispositif de traitement (2), et peuvent être déplacés avec le rail, la barre (9) ou par ceux-ci orthogonalement au dispositif de traitement (2).

8. Dispositif selon l'une quelconque des revendications 1 à 7, **caractérisé en ce que** le dispositif d'acheminement (4) et le dispositif d'évacuation (5) sont situés au moins sensiblement dans le plan du dispositif de traitement (2).

9. Dispositif selon l'une quelconque des revendications 1 à 8, **caractérisé en ce que** le poste d'acheminement (10) et le poste d'évacuation (11) sont disposés de manière linéaire par rapport au dispositif de traitement (2), de préférence dans le plan de celui-ci, ou sont disposés en étant décalés entre eux, de préférence dans le plan du dispositif de traitement (2).

10. Dispositif selon l'une quelconque des revendications 1 à 9, **caractérisé en ce que** le poste d'acheminement (10) et le poste d'évacuation (11) sont situés au moins sensiblement à l'intérieur de la zone du dispositif de traitement (2), ou dans des zones de bordure opposées du dispositif de traitement (2), ou sont disposés côte à côte à l'intérieur du dispositif de traitement (2), de préférence dans une zone sensiblement centrale, ou sont situés au moins sensiblement en dehors de la zone du dispositif de traitement (2), de préférence de part et d'autre à côté du dispositif de traitement (2).

11. Dispositif selon l'une quelconque des revendications 1 à 10, **caractérisé en ce que** le dispositif d'acheminement (4) et le dispositif d'évacuation (5) sont réalisés dans des zones d'extrémité opposées du dispositif de traitement (2).

12. Dispositif selon l'une quelconque des revendications 1 à 10, **caractérisé en ce que** le dispositif d'acheminement (4) et le dispositif d'évacuation (5) sont réalisés dans la même zone d'extrémité du dispositif de traitement (2).

13. Dispositif selon l'une quelconque des revendications 1 à 11, **caractérisé en ce que** le dispositif d'acheminement (4) achemine sur un côté du dispositif de traitement (2) et le dispositif d'évacuation (5) évacue sur l'autre côté du dispositif de traitement (2).

14. Dispositif selon l'une quelconque des revendications 1 à 13, **caractérisé en ce que** le dispositif d'acheminement (4) et le dispositif d'évacuation (5) sont situés au moins sensiblement dans le même plan que le dispositif de traitement (2) ou dans un plan commun à côté ou en dessous du dispositif de traitement (2).
